# EUROPEAN PATENT APPLICATION

(11) **EP 4 632 945 A1**
(43) Date of publication of application: **15.10.2025**
(21) Application number: 25167697.9
(22) Date of filing: 01.04.2025
(51) Int. Cl.: H01Q 1/12, F16M 11/12, H01Q 1/28, H01Q 3/08, H01Q 3/20

(54) **SYSTEM AND METHOD FOR FINE POINTING OF A PAYLOAD**

(30) Priority: 10.04.2024 US 202463632225 P; 14.11.2024 US 202463720596 P
(71) Applicant: MacDonald, Dettwiler and Associates Corporation, Ste-Anne-de-Bellevue, QC H9X 3R2 (CA)
(72) Inventor: Horth, Richard, Sainte-Anne-de-Bellevue, Québec, H9X 3R2 (CA); Lanciault, François, Sainte-Anne-de-Bellevue, Québec, H9X 3R2 (CA); Glâtre, Karim, Sainte-Anne-de-Bellevue, Québec, H9X 3R2 (CA)
(74) Representative: Grünecker Patent- und Rechtsanwälte PartG mbB

(57) **Abstract**

Provided herein is a two-axis pointing system and methods for pointing a payload, including a first actuator connected to the payload by at least a first connecting rod, wherein the first actuator controls movement of the payload along a first actuator axis by moving the first connecting rod, a second actuator connected to the payload by a second connecting rod, wherein the second actuator controls movement of the payload along a second actuator axis by moving the second connecting rod, and a first strut, a second strut, and a third strut, wherein each strut is movably connected to the payload at a first end and movably connected to a base at a second end, wherein the first strut, second strut, and third strut restrict movement of the payload, caused by the first actuator and the second actuator, to rotation around a virtual pivot point.

## Description

### Technical Field

The following relates generally to payload pointing mechanisms, and more particularly to systems and methods for two-axis pointing of a payload, such as antenna reflector.

### Background

In conventional antenna pointing mechanisms, when a reflector is steered relative to a fixed signal source (or signal receiver) the signal (e.g., radiofrequency) is degraded due to defocussing and/or depointing.

To achieve the least signal degradation, the focal point of the reflector being moved by the pointing mechanism needs to remain as close to the source (or receiver) as possible.

Accordingly, there is a need in the art for improved systems and methods which enable the pivot point of reflector movement to be close to the source and reflector focal point to overcome at least some of the disadvantages of existing systems and methods.

### Summary

Provided herein is a two-axis pointing system for pointing a payload, comprising a payload, a first actuator connected to the payload by at least a first connecting rod, wherein the first actuator controls movement of the payload along a first actuator axis by moving the first connecting rod, a second actuator connected to the payload by a second connecting rod, wherein the second actuator controls movement of the payload along a second actuator axis by moving the second connecting rod, and a first strut, a second strut, and a third strut, wherein each strut is movably connected to the payload at a first end and movably connected to the base at a second end opposite the first end, wherein the first strut, second strut, and third strut restrict movement of the payload, caused by the first actuator and the second actuator, to rotation around a virtual pivot point.

In an embodiment, the first strut has a first strut axis along a length of the first strut, the second strut has a second strut axis along a length of the second strut, and the third strut has a third strut axis along a length of the third strut, wherein extrapolations of the first strut axis, the second strut axis, and the third strut axis intersect at a virtual pivot point of the payload when the payload is at a central position at the middle of a pointing range of the payload.

The payload may be an antenna reflector.

The payload may have a focal point and the virtual pivot point may be approximately at the focal point.

The first actuator axis and the second actuator axis may be orthogonal.

The first actuator and the second actuator may be each one of a rotary actuator and a linear actuator.

Each of the first strut, second strut, and third strut may be connected to the payload by a spherical bearing.

Each of the first strut, second strut, and third strut may be connected to a support structure of the payload by a spherical bearing.

Each of the first strut, second strut, and third strut may be positioned equidistant around a center of rotation of the payload.

The first strut, second strut, and third strut may be connected to a base.

The base may be a single component.

The base may comprise more than one component.

The first actuator and the second actuator may be connected to the base.

The at least a first connecting rod may be a single connecting rod with two prongs wherein each one of the prongs is connected to the payload.

The at least a first connecting rod may be two separate connecting rods wherein each of the two separate connecting rods is connected to both the first actuator and the payload.

Provided herein is a method of operation of pointing a payload with a two-axis pointing mechanism, the method comprising actuating a first actuator, wherein the first actuator is connected to a payload by at least a first connecting rod and bearings, and wherein the first actuator moves the first connecting rod to move the payload in a first direction; actuating a second actuator, wherein the second actuator is connected to the payload by a second connecting rod and a bearing, and wherein the second actuator moves the second connecting rod to move the payload in a second direction; and wherein the payload is movably connected by spherical bearings to a first strut, a second strut, and a third strut, wherein the first strut, second strut, and third strut are movably connected to a base, and wherein the first strut, the second strut, and the third strut restrict the movement of the payload to rotation around a virtual pivot point.

Other aspects and features will become apparent to those ordinarily skilled in the art, upon review of the following description of some exemplary embodiments.

### Brief Description of the Drawings

The drawings included herewith are for illustrating various examples of articles, methods, and apparatuses of the present specification. In the drawings:
Figure 1A is a side perspective view schematic diagram of a two-axis payload pointing system, according to an embodiment;
Figure 1B is a different side perspective view schematic diagram of the two-axis payload pointing system of Figure 1A;
Figure 1C is a different side perspective of the two-axis payload pointing system of Figure 1A; and
Figure 2 is a flow diagram of a method of operating a two-axis payload pointing mechanism, according to an embodiment.

### Detailed Description

Various apparatuses or processes will be described below to provide an example of each claimed embodiment. No embodiment described below limits any claimed embodiment and any claimed embodiment may cover processes or apparatuses that differ from those described below. The claimed embodiments are not limited to apparatuses or processes having all of the features of any one apparatus or process described below or to features common to multiple or all of the apparatuses described below.

A description of an embodiment with several components in communication with each other does not imply that all such components are required. On the contrary, a variety of optional components are described to illustrate the wide variety of possible embodiments of the present invention.

Further, although process steps, method steps, algorithms or the like may be described (in the disclosure and/or in the claims) in a sequential order, such processes, methods, and algorithms may be configured to work in alternate orders. In other words, any sequence or order of steps that may be described does not necessarily indicate a requirement that the steps be performed in that order. The steps of processes described herein may be performed in any order that is practical. Further, some steps may be performed simultaneously.

When a single device or article is described herein, it will be readily apparent that more than one device/article (whether or not they cooperate) may be used in place of a single device/article. Similarly, where more than one device or article is described herein (whether or not they cooperate), it will be readily apparent that a single device/article may be used in place of the more than one device or article.

The following relates generally to payload pointing mechanisms, and more particularly to systems and methods for two-axis pointing of a payload, such as antenna reflector. While an antenna reflector is discussed and shown herein, it is to be understood that other payloads requiring pointing are contemplated by the present disclosure.

The two-axis pointing mechanism of the present disclosure allows for rotating an antenna reflector around a virtual pivot point along two orthogonal axes. In a perfect system, the pivot point of the movement of the antenna reflector would be at the source/receiver of the radiofrequency (RF) signal and the gimbals payload would be a parabolic reflector. In conventional systems, when the parabolic reflector is rotated, the position of its focal point moves away from the source causing signal degradation.

Existing fine-pointing mechanisms which work in two-axes, for example the system described in US 9,172,154, result in movement of the focal point as such systems are not designed for staying close to a single source. These types of systems are concerned with precision of pointing but do not always maintain acceptable or preferred (i.e., excellent) RF signal performance.

The two-axis pointing mechanism of the present disclosure includes three struts movably connected to a payload. In an embodiment, the payload is an antenna. In an embodiment, the struts are connected to the payload by spherical bearings. In other embodiments the struts may be movably connected to the payload by movable connections other than spherical bearings. The struts are movable by two fixed actuators. Together the struts and movable connections (e.g., spherical bearings) allow for movement of the reflector in two orthogonal axes with each actuator driving motion on one of the axes. The focal point of the reflector is very close to the virtual pivot point of the reflector. Conventional pointing systems merely tilt the reflector. The systems of the present disclosure rotate the reflector around the virtual pivot point.

The two-axis pointing mechanism enables rotation of the reflector around the virtual pivot point instead of merely tilting the reflector as is the function of conventional pointing mechanisms. This allows for minimal movement of the reflector focal point away from the source (or receiver). This is significant as even a couple of centimeters of misalignment can degrade an RF signal.

The virtual pivot point is in three dimensions which permits virtual pivoting in two orthogonal axes. The effect of the virtual pivot point of the pointing system is similar to rotating the entire antenna around its focal point.

The two-axis pointing mechanism of the present disclosure may provide various advantages, such as reduced defocusing, reduced depointing, greater fine resolution, no mobile harness requirements, and no mobile RF components. The two-axis pointing mechanism may eliminate the need for a hold-down release mechanism for the reflector.

The two-axis pointing mechanism system may be used for Gregorian antennas, Cassegrain antennas, Single Offset antennas, Center-fed antenna, and Dragonian antennas. Where the antenna has more than one focal point or one or more subreflectors, for example in a dual reflector antenna with an ellipsoid or a hyperboloid sub reflector, the two-axis pointing mechanism can be set up in the configuration required to minimize signal degradation.

The two-axis pointing mechanism is particularly suited to use cases in space, but is not limited to space applications.

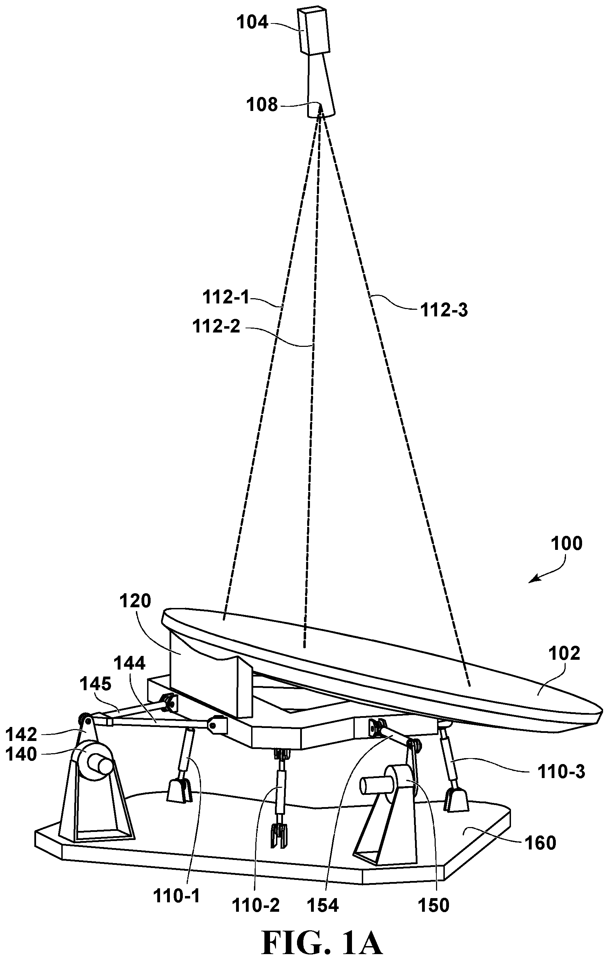

Referring now to Figures 1A-1C, shown therein is a two-axis pointing system 100, according to an embodiment.

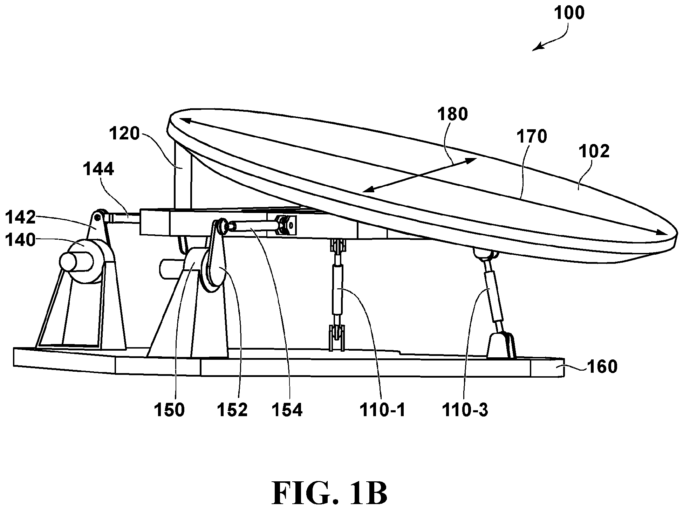

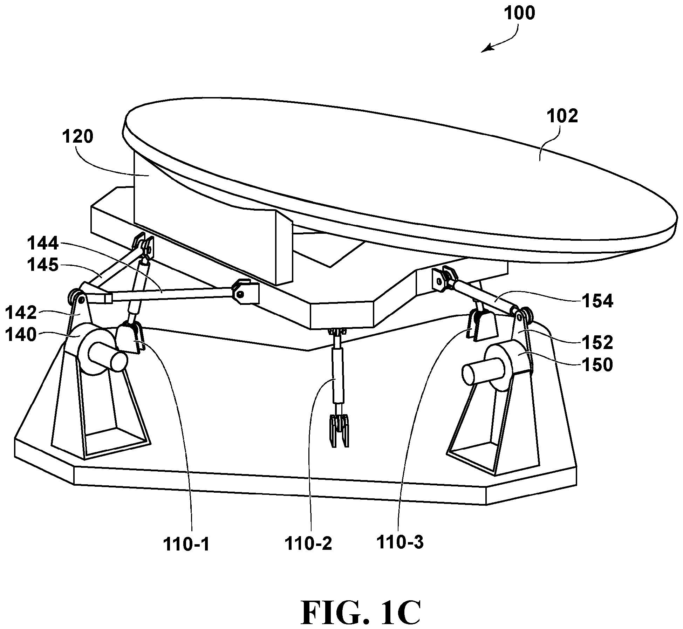

Figures 1B and 1C show the two-axis pointing system 100 of Figure 1A from a different perspective.

The two-axis pointing system 100 includes an antenna reflector 102 mounted on a support structure 120, a first strut 110-1 a second strut 110-2, a third strut 110-3 , a first rotary actuator 140 and a second rotary actuator 150. The three struts are collectively referred to herein as struts 110.

The antenna reflector 102 may be considered and referred to as a moveable reflector. The antenna reflector 102 is configured to reflect an RF signal to or from a fixed RF source/receiver, which may be a horn antenna.

The antenna reflector 102 is parabolic and has a focal point 104 close to the virtual pivot point of the antenna reflector 102. The focal point 104 may be referred to as a reflector focal point.

In other embodiments, the two-axis pointing system may be pointing a payload other than an antenna reflector. In other embodiments the payload may not have a focal point.

The support structure 120 is connected to a base 160 by the struts 110, In other embodiments, there may be no support structure for the antenna reflector 102, or for non-antenna payload, and the struts may be connected directly to the antenna/payload.

In other embodiments, the base 160 to which the struts 110 are connected may comprise more than one component.

The virtual pivot point 108 is a point around which the payload pivots. The virtual pivot point is near a focal point or pointing location of the payload. During pointing of the payload, the struts 110 restrict the movement of the payload such that the payload rotates around the virtual pivot point. When the payload is at a central (or nominal) position approximately at a middle of a pointing range of the payload an intersection point of extrapolations of a first strut axis 112-1 along a length of the first strut 110-1, a second strut axis 112-2 along a length of the second strut 110-2, and a third strut axis 112-3 along a length of the third strut 110-3 (collectively strut axes 112) is approximately at the virtual pivot point. When the payload is moved away from the middle of the pointing range the intersection of the three strut axes 112 is no longer at the virtual pivot point.

Each of the struts 110 is coupled at a first end to the support structure 120 by a first spherical bearing. Each of the struts 110 is coupled to the base 160 by a second spherical bearing.

In other embodiments a movable connection other than a spherical bearing may be used to connect the struts to the support and/or to the base.

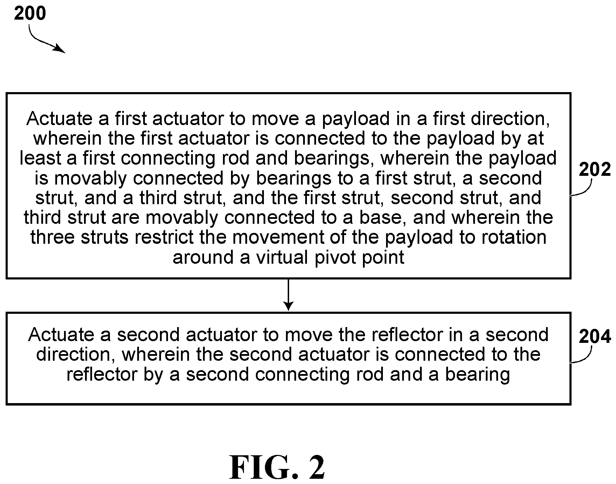

In the embodiment of Figures 2A and 2B, the three struts are positioned equidistant around the reflector 102. That is, adjacent struts are disposed 120° apart around the reflector 120. However, in other embodiments the struts may be in any relative position which allows for the desired virtual pivot point, and therefore the desired movement, of the antenna reflector 102.

As well, the length of the three struts 110, 120, 130 relative to the size of the reflector 102 are important for generating the desired virtual pivot point and movement of the antenna 102 (or other payload). In some embodiments, the length of each strut may be the same as the other struts while in other embodiments the length of the struts may be different.

In the embodiment of Figures 2A and 2B, where the payload is an antenna reflector, the virtual pivot point 108 is close to the focal point 104 of the reflector to enable movement of the antenna reflector while maintaining the proximity to the focal point 104. In the embodiment of Figures 1A-C, the first rotary actuator 140 and the second rotary actuator 150 are positioned approximately 90° apart relative to the center of the reflector 102. However, in other embodiments the rotary actuators may be positioned closer than 90° apart or further than 90° apart around the payload, as long as the desired range of movement is achieved.

The first and second rotary actuators 140, 150 are fixed actuators which are mounted on a base or support structure 160. In other embodiments the struts 110 and the actuators 140, 150 may be mounted on separates bases.

The first rotary actuator 140 is coupled to a crank 142 at a first end of the crank 142. The first crank 142 is connected to a first connecting rod 144 and a second connecting rod 145 at first ends of the rods 144, 145. Connecting rods 144 and 145 are connected to the support structure 120 at second ends of the rods 144, 145. Movement of the first rotary actuator 140 moves the connecting rods 144, 145 which in turn moves the reflector 102.

In the embodiment of Figures 1A-C the connecting rods 144 and 145 are positioned between the first strut 110 and the second strut 120. However, the configuration of the first actuator and the connecting rods relative to the struts is not important. That is, the configuration could be any configuration which allows the desired movement.

In other embodiments, the first connecting rod 144 and second connecting rod 145 could be a single Y-shaped connecting rod, which connects to the reflector 102 in two locations. Connecting the first actuator 140 to the reflector 102 (or other payload) in two locations provides control of the movement of the reflector 102 in two degrees of freedom.

In an oversimplification of the role of the first actuator, for example if the first actuator were the only actuator present and actuating the payload, the first actuator controls movement of the reflector 102 along X axis 170 which causes rotation of the reflector 102 around Y axis 180. Having at least one point of connection to the reflector 102 prevents movement of the reflector 102 in a Z axis. In the embodiment of figure 1, there are two points of connection to the reflector 102.

The second rotary actuator 150 is coupled to a crank 152 at a first end of the crank. A connecting rod 154 is coupled to a second end of the crank 152. A spherical bearing 151 connects the crank 152 to the connecting rod 154. A spherical bearing connects the connecting rod 154 to the support structure 120 of the reflector 102. The connecting rod 154 controls one degree of freedom of the reflector 102. Movement of the second rotary actuator 150 moves the second connecting rod 154, which in turns moves the reflector 102.

Again, in an oversimplification of the role of the second actuator, for example if the second actuator were the only actuator present and actuating the payload, the second actuator 150 controls movement of the reflector 102 along the Y axis 180 which causes rotation of the reflector 102 around the X axis 170.

The movement of each individual actuator was described above in simplified terms, however, the actual movement of the reflector is more complex. Together, the two rotary actuators rotate the reflector 102 around the virtual pivot point 108 (which is close to the focal point 104) to steer the RF beam without affecting the signal, e.g., by losing focus. The movement of one actuator affects the movement of the other actuator and there are transfer functions which determine the actual movement of the reflector due to each actuator. While the first actuator mostly moves the reflector around the Y axis and the second actuator mostly moves the reflector around the X axis both actuators may also move the reflector around the other axis. That is, for example, the movement effected by the first actuator is mostly around the Y axis but the first actuator may also move the reflector around the X axis to some extent based on the effect the second actuator has on the position and movement of the reflector, and vice versa.

In some embodiments, the system 100 may use linear actuators instead of rotary actuators to actuate the reflector 102. As described above, when the actuators are rotary actuators, cranks and connecting rods are used. When the actuators are linear actuators, only connecting rods are used.

Referring now to Figure 2, shown therein is a method 200 of operating a two-axis pointing system, according to an embodiment.

The two-axis pointing system may be similar to system 100 of Figures 1A-C.

The two-axis pointing system includes a base to which a first actuator and a second actuator are connected. The system further includes a first strut, a second strut, and a third strut movably connected to the base. The base may be a single component or may comprise more than one component. That is, the actuators and struts may be connected to different base components.

Each of the first, second, and third struts are connected to a payload by spherical bearings (or other bearings) on the base side of the payload. For example, if the payload is a reflector the struts are connected to the side of the reflector closest to the base and which is not used to reflect signals. In other embodiments, the struts may be connected indirectly to the payload through a support structure of the payload.

In an embodiment, the three struts are positioned at the same distance from the center of the payload (e.g., reflector) and equidistant around the payload approximately 120° apart. In other embodiments, the struts may be any relative distance from a center of the payload and from each other strut.

The three struts support the payload and control the movement of the payload.

During pointing of the payload, the struts restrict the movement of the payload such that the payload rotates around the virtual pivot point. At a central position of the payload wherein the payload is approximately at a middle of a pointing range of the payload, the first, second, and third strut axes intersect at the virtual pivot point of the payload. In an embodiment where the payload has a focal point, e.g., an antenna reflector, the virtual pivot point is close to a focal point of the payload. For an antenna reflector, the focal point is as near as possible to either a source of an RF signal or a receiver of an RF signal.

In an embodiment, the first actuator and second actuator are positioned approximately 90° apart relative to a rotational center of the payload with each actuator representing one of the two axes of the two-axis pointing mechanism. In other embodiments, the first actuator and the second actuator may be greater than or less than 90° apart.

In an embodiment, the first actuator is connected to the payload at two locations. The connection at two locations may be achieved by either two discrete connecting rods or a single connecting element which has two connecting rods, for example in a Y or V shape. The two connecting rods are connected to the payload by spherical or rotational bearings.

By connecting to the payload at two locations, the first actuator is able to control two degrees of freedom of movement of the payload.

In an embodiment where the first actuator is a rotary actuator, the first actuator includes a crank connected to the connecting rod(s) by a spherical bearing(s).

In an embodiment where the first actuator is a linear actuator, the first actuator does not include a crank.

The second actuator is connected to the payload by a single connecting rod. The single connecting rod is connected to the payload by a spherical bearing.

In an embodiment where the second actuator is a rotary actuator, the second actuator includes a crank connected to the connecting rod by a spherical bearing.

In an embodiment where the second actuator is a linear actuator, the second actuator does not include a crank.

At 202, the first actuator (either a rotary actuator or linear actuator) is actuated to move the payload in a first application direction, i.e., along a first actuator axis. The rotation of the payload is generally around an axis which is orthogonal to the first actuator axis. However, the actuation of the struts and therefore the payload due to the first actuator is dependent on the actuation of the second actuator and vice versa. That is, in order for the first actuator to move the payload to the correct position the position of the payload due to the second actuator must be considered, and therefore the rotation of the payload due to the first actuator may not occur solely around the orthogonal axis.

Because the first actuator is connected to the payload at two locations (either two connecting rods or a single connecting rod with a Y shape), rotation of the payload along a Z axis (where the first actuator axis is an X axis and the rotational axis is a Y axis) is prevented when the first actuator is actuated.

In other embodiments, the first actuator may be connected to the payload at one location.

At 208, the second actuator (either a rotary actuator or a linear actuator) is actuated to move the payload in a second application direction, i.e., along a second actuator axis. The rotation of the payload is generally around an axis which is orthogonal to the second actuator axis. However, the actuation of the second actuator is dependent on the actuation of the first actuator and vice versa as described above. The first actuator axis and the second actuator axis are on the same plane, and may be orthogonal or may not be orthogonal.

Together the movement of the payload in the first direction and the second direction rotates the payload to point to the desired pointing location.

It is to be understood that in some circumstances the payload may only be moved by the first actuator or only moved by the second actuator to point the payload in a desired direction.

While the above description provides examples of one or more apparatus, methods, or systems, it will be appreciated that other apparatus, methods, or systems may be within the scope of the claims as interpreted by one of skill in the art.

## Claims

1. A two-axis pointing system for pointing a payload, comprising:
a payload;
a first actuator connected to the payload by at least a first connecting rod, wherein the first actuator controls movement of the payload along a first actuator axis by moving the first connecting rod;
a second actuator connected to the payload by a second connecting rod, wherein the second actuator controls movement of the payload along a second actuator axis by moving the second connecting rod; and
a first strut, a second strut, and a third strut, wherein each strut is movably connected to the payload at a first end and movably connected to a base at a second end, wherein the first strut, second strut, and third strut restrict movement of the payload, caused by the first actuator and the second actuator, to rotation around a virtual pivot point.

2. The system of claim 1 wherein the wherein the first strut has a first strut axis along a length of the first strut, the second strut has a second strut axis along a length of the second strut, and the third strut has a third strut axis along a length of the third strut, and wherein extrapolations of the first strut axis, the second strut axis, and the third strut axis approximately intersect at a virtual pivot point of the payload when the payload is at a central position at the middle of a pointing range of the payload.

3. The system of claim 1 wherein the payload is an antenna reflector.

4. The system of claim 1 wherein the payload has a focal point and the virtual pivot point is approximately at the focal point.

5. The system of claim 1 wherein the first actuator axis and the second actuator axis are approximately orthogonal.

6. The system of claim 1 wherein the first actuator and the second actuator are each one of a rotary actuator and a linear actuator.

7. The system of claim 1 wherein the each of the first strut, second strut, and third strut are connected to the payload by a spherical bearing.

8. The system of claim 1 wherein the each of the first strut, second strut, and third strut are connected to a support structure of the payload by a spherical bearing.

9. The system of claim 1 wherein each of the first strut, second strut, and third strut are approximately positioned equidistant around a center of rotation of the payload.

10. The system of claim 1 wherein the first actuator and the second actuator are connected to the base.

11. The system of claim 1 wherein the at least a first connecting rod is a single connecting rod with two prongs wherein each one of the prongs is connected to the payload.

12. The system of claim 1 wherein the at least one connecting rod is connected to the payload in a way that permits relative motion only along one axis of rotation.

13. The system of claim 1 wherein the at least a first connecting rod is two separate connecting rods wherein each of the two separate connecting rods is connected to both the first actuator and the payload.

14. The system of claim 1 wherein the payload is a dual reflector antenna and the virtual pivot point is approximately at the second focal point of an ellipsoid or a hyperboloid sub reflector.

15. A method of operation of pointing a payload with a two-axis pointing mechanism comprising:
actuating a first actuator, wherein the first actuator is connected to a payload by at least a first connecting rod and bearings, and wherein the first actuator moves the first connecting rod to move the payload in a first direction;
actuating a second actuator, wherein the second actuator is connected to the payload by a second connecting rod and a bearing, and wherein the second actuator moves the second connecting rod to move the payload in a second direction; and
wherein the payload is movably connected by spherical bearings to a first strut, a second strut, and a third strut, wherein the first strut, second strut, and third strut are movably connected to a base, and wherein the first strut, the second strut, and the third strut restrict the movement of the payload to rotation around a virtual pivot point.
